# FASCICULE DE BREVET EUROPEEN

(11) **EP 3 154 795 B1**
(45) Date de publication et mention de la délivrance du brevet: **04.08.2021**
(21) Numéro de dépôt: 15729439.8
(22) Date de dépôt: 12.06.2015
(51) Int. Cl.: B42D 25/351

(54) **PROCÉDÉ DE FABRICATION D'UN SUPPORT DE DONNÉES MULTICOUCHE À MARQUAGE DE SÉCURITÉ ET POUVANT ÊTRE MARQUÉ PAR LASER**
VERFAHREN ZUR HERSTELLUNG EINES MEHRSCHICHTIGEN DATENTRÄGERS MIT DURCH LASER MARKIERBARER SICHERHEITSMARKIERUNG
METHOD FOR MANUFACTURING A MULTILAYER DATA MEDIUM WITH SECURITY MARKING WHICH CAN BE MARKED BY LASER

(30) Priorité: 13.06.2014 FR 1455419
(43) Date de publication de la demande: 19.04.2017
(73) Titulaire: FASVER, 34670 Baillargues (FR)
(72) Inventeur: PHILIPPE, Eric, 13430 Eyguières (FR); BES, Laurence, 34830 Jacou (FR)
(74) Mandataire: HGF
(86) Numéro de dépôt international: PCT/EP2015/063201
(87) Numéro de publication internationale: WO 2015/189404

(56) Documents cités:
- EP-A2- 2 465 701
- EP-A2- 2 465 703
- US-A1- 2012 263 893
- US-B2- 7 252 239
- None

## Description

L'invention concerne un procédé de fabrication d'un support de données multicouche par lamination à chaud et sous pression d'un empilement d'une pluralité de couches superposées comprenant au moins une couche en au moins un matériau thermoplastique, susceptible d'être marqué sous l'effet d'un rayonnement laser appliqué sur au moins une face extérieure de ce support, et comprenant au moins un marquage de sécurité à effet optiquement variable. Elle s'étend au support ainsi obtenu, à son utilisation pour la fabrication d'un document officiel, et à un document officiel ainsi obtenu.

Les documents officiels sont des documents qui, en raison de leur nature et/ou des droits qu'ils peuvent conférer, doivent être protégés contre les tentatives de falsification et/ou les contrefaçons et/ou pour garantir une authentification et/ou pour garantir leur intégrité (c'est-à-dire le fait qu'elles n'ont pas été altérées ou modifiées). Il peut s'agir notamment de passeports, visas, cartes d'identité, permis de conduire, cartes d'immatriculation de véhicules (cartes grises), cartes bancaires, cartes de fidélité, chèques bancaires, diplômes, certificats, titres de transport, cartes de contrôle d'accès, badges, étiquettes, actes légaux, contrats, registres légaux, plans cadastraux, documents fiduciaires, billets de banque, plans de fabrication ou autres plans... Les documents officiels portent des marquages, tels que des mentions variables de personnalisation (nom, prénom, adresse, photo, signature... d'un titulaire ou des parties...) et/ou des mentions communes (motifs sécuritaires, matrices, cadres, noms de champs, sceaux, hologrammes, signatures, valeurs,...).

Dans tout le texte, le terme "visible" qualifie tout rayonnement électromagnétique dont la composition spectrale est située dans le spectre des longueurs d'onde visibles par l'homme, c'est-à-dire dans les longueurs d'onde comprises entre 0,4 µm et 0,8 µm.

Dans tout le texte, on désigne par "marquage" tout signe ou motif réalisé sur une couche d'un document, pouvant être lu par l'homme et/ou par machine (OCR), au moins sous certaines conditions (notamment sous éclairage normal en lumière visible ; et/ou sous éclairage spécifique ; et/ou après activation d'un dispositif électronique (écran) ou autre...). Il peut s'agir notamment de mentions variables de personnalisation (nom, état civil, photographie, valeur, dates...) d'un document officiel ou de mentions communes et/ou de sécurité ; de textes (écriture manuelle ou caractères imprimés) ; de codes (ASCII, codes universels à lecture optoélectronique tels que codes à barres...) ; d'hologrammes, de dessins, d'images ou photographies ; de tâches ou aplats... Les documents officiels contiennent en général des marquages de sécurité pour empêcher ou rendre très complexes leur reproduction ou leur falsification. Ces marquages de sécurité peuvent être du type visibles dans le domaine visible par simple observation à l'œil nu (sécurité de premier niveau) ; ou du type pouvant être contrôlés à l'aide d'un dispositif spécifique tel qu'une lampe à rayonnement ultraviolet (sécurité de deuxième niveau) ; ou du type pouvant être contrôlés uniquement dans un laboratoire certifié (sécurité de troisième niveau).

Dans tout le texte, on désigne par "effet optiquement variable" tout marquage produisant des aspects optiques -notamment mais non exclusivement dans le domaine visible- (par exemple différentes couleurs ou différents tons) qui varient selon les directions d'observation de ce marquage. Il peut s'agir en particulier de marquages par des pigments iridescents et/ou interférentiels, ou avec des encres à cristaux liquides ou autres.

Dans tout le texte, l'expression "optiquement superposées" désigne des couches ou portions de couches disposées en regard l'une de l'autre de telle sorte qu'un rayon lumineux traversant l'une d'entre elles traverse les autres. Deux telles couches ou portions de couches optiquement superposées peuvent être physiquement superposées au contact l'une de l'autre, ou séparées par des couches ou portions de couches intercalaires.

Dans tout le texte, "papier" désigne toute feuille obtenue par voie humide à l'aide d'une suspension de fibres de cellulose naturelle et/ou de fibres minérales et/ou de fibres végétales et/ou de fibres synthétiques polymériques autres que la cellulose, pouvant contenir diverses charges et additifs telles qu'utilisée en papeterie. L'expression "papier synthétique" désigne tout papier comprenant des fibres synthétiques polymériques autres que la cellulose.

Dans tout le texte, l'expression "au moins sensiblement" indique, de façon habituelle, qu'une caractéristique, structurelle ou fonctionnelle, ne doit pas être prise comme marquant une discontinuité abrupte, qui n'aurait pas de sens physique, mais couvre non seulement cette structure ou cette fonction, mais également des variations légères de cette structure ou de cette fonction qui produisent, dans le contexte technique considéré, un effet de même nature, sinon de même degré. Par ailleurs les expressions "comportant/comprenant un(e)" sont synonymes de "comportant/comprenant au moins un(e)".

De nombreux documents officiels tels que les cartes bancaires, cartes d'identité, permis de conduire, cartes d'accès individuel à des sites ou des transports en commun, feuilles de passeport, fiches douanières, visas, documents fiduciaires, billets de banque... sont formés de supports de données multicouche obtenus par lamination à chaud (température typiquement de l'ordre de 150°C à 200°C) et sous pression (typiquement de l'ordre de 10⁶ Pa à 2.10⁶ Pa) d'une pluralité de couches en matériau thermoplastique -notamment en polycarbonate, matériau présentant par ailleurs de nombreux avantages dans ces applications (rigidité, durabilité, facilité et fiabilité des marquages (inscriptions variables, motifs de sécurité...), possibilité d'effectuer des marquages par rayonnement laser...)-.

Du point de vue industriel, il est important de pouvoir fabriquer ces supports de données en grandes séries, en incorporant dans ces derniers tous les marquages constituant des mentions communes et tous les éléments de sécurité, pour pouvoir, dans une étape finale mise en oeuvre en général sur un site distinct, réaliser une personnalisation par marquage sous l'effet d'un rayonnement laser permettant d'insérer des mentions variables à chaque support de données.

Pour permettre un tel marquage final de personnalisation par rayonnement laser, le support de données incorpore une sous-couche de marquage laser sensible au rayonnement laser, c'est-à-dire produisant un marquage sous l'effet du rayonnement laser, soit du fait qu'elle comprend au moins un composé tel que du noir de carbone (cf. par exemple US7252239), soit qu'elle peut être gravée par le rayonnement laser (ablation partielle dans l'épaisseur par vaporisation comme décrit par exemple par EP2407314).

La sous-couche de marquage laser est protégée par une ou plusieurs couche(s) de couverture incorporant des marquages de sécurité (mentions communes) à des fins esthétiques et/ou pour protéger la sous-couche de marquage laser d'une attaque mécanique ou chimique. Chaque couche de couverture est appliquée d'un côté de la sous-couche de marquage laser lors du procédé de fabrication du support par lamination à chaud et sous pression, avant réalisation du marquage laser lui-même qui se fait à travers l'épaisseur de chaque couche de couverture.

US 5304789 décrit ainsi un support de données multicouche en forme de carte comprenant une sous-couche de marquage laser sensible à un rayonnement laser non visible formant une sécurité de deuxième niveau (camouflée par une couche apparaissant noire dans le domaine visible qui peut être la sous-couche de marquage laser elle-même), une couche de couverture transparente au rayonnement électromagnétique du laser, et une couche de fond opaque contrastant. La couche de couverture peut elle-même être faiblement sensible au rayonnement laser. Des impressions ou des films contenant des pigments iridescents peuvent être disposés au-dessus de la sous-couche de marquage laser pour produire un effet esthétique plaisant. La sous-couche de marquage laser peut s'étendre sur une portion de surface seulement, selon un motif formant lui-même un marquage, une autre portion de la face extérieure du support de données présentant des impressions apparaissant en lumière visible.

D'autre part, US 2012/263893 décrit un support de données multicouche comprenant une couche de marquage sensible au rayonnement laser, une couche de revêtement thermochromique au-dessus de la couche de marquage ainsi qu'une couche optiquement variable au-dessus de la couche de revêtement thermochromique, un marquage laser pouvant être réalisé dans la couche de marquage à travers la couche de revêtement thermochromique et la couche optiquement variable.

Il est important que les marquages d'un document officiel puissent être lus et déchiffrés facilement et de façon fiable, par l'homme et/ou par un dispositif de lecture (scanner) doté d'un logiciel de reconnaissance de caractères (OCR). Or, les inventeurs ont déterminé que tel n'était pas le cas dans certaines configurations relatives de marquages de sécurité et des marquages laser de personnalisation. En outre, il se trouve que ces configurations sont très avantageuses en termes de sécurité.

Il est aussi à noter à ce titre qu'il est important que le rayonnement laser utilisé pour le marquage de personnalisation puisse être appliqué sans nécessiter des ajustements et réglages complexes, et puisse être mis en œuvre au contraire de façon standardisée, sans réglage, par exemple avec un laser infrarouge à 1064 nm d'intensité constante. En effet les marquages de personnalisation de documents officiels doivent pouvoir être effectués rapidement et à haute cadence sous le contrôle d'administrations qui sont de simples utilisateurs de dispositifs de marquage par laser. Il convient donc d'éviter d'avoir à effectuer des ajustements et réglages de ce dispositif en fonction des éventuels marquages de sécurité pouvant être présents sur les supports de données et, surtout, au cours d'une même étape de marquage de personnalisation d'un document.

L'invention vise donc à pallier ces inconvénients en proposant un procédé de fabrication d'un support de données multicouche laminé à chaud et sous pression, et un support de données ainsi obtenu, permettant d'obtenir une grande sécurité de protection des marquages laser réalisés dans une étape finale de personnalisation.

L'invention vise plus particulièrement à permettre des configurations de chevauchement partiel d'un marquage à effet optiquement variable avec un marquage laser tout en produisant une grande qualité du marquage laser, de telle sorte que ces marquages puissent être lus et déchiffrés facilement et de façon fiable, aussi bien par l'homme que par un dispositif de lecture doté d'un logiciel de reconnaissance de caractères.

L'invention vise également à procurer un support de données permettant la réalisation d'un tel marquage laser de personnalisation rapidement et à haute cadence sans nécessiter aucun ajustement ou réglage du laser au cours de chaque étape de marquage laser ni en fonction des éventuels marquages de sécurité pouvant être présents sur le support de données.

Pour ce faire l'invention concerne un procédé de fabrication d'un support de données multicouche par lamination à chaud et sous pression d'un empilement d'une pluralité de couches superposées comprenant au moins une couche en au moins un matériau thermoplastique, susceptible d'être marqué sous l'effet d'un rayonnement laser appliqué sur au moins une face extérieure de ce support de données, selon la revendication 1.

L'invention s'étend également à un support de données multicouche comprenant au moins une couche en au moins un matériau thermoplastique, susceptible d'être marqué sous l'effet d'un rayonnement laser appliqué sur au moins une face extérieure de ce support de données, selon la revendication 7.

Les inventeurs ont déterminé, contrairement à l'enseignement de l'état de la technique, qu'une couche de couverture et un marquage à effet optiquement variable qui recouvrent la sous-couche de marquage laser ne sont pas totalement perméables et transparents au rayonnement laser de marquage, et présentent au contraire des sensibilités variables en absorbant partiellement le rayonnement laser. Les inventeurs ont également déterminé que cette absorption est très variable selon les différentes compositions de couches de couverture et des marquages à effet optiquement variable utilisés. En particulier, contrairement à ce qu'indiquent les documents antérieurs suscités, il s'avère que la majorité des pigments interférentiels interagissent avec un rayonnement laser de marquage, et que cette interaction dépend en particulier de la couleur des pigments. Il en résulte non seulement un marquage intempestif se superposant au marquage à effet optiquement variable, mais également et surtout un affaiblissement, qui peut être considérable, dans l'aspect extérieur du marquage laser.

Par une variation de la teneur (nature et/ou proportion) en agent(s) de marquage sensible(s) audit rayonnement laser incorporé(s) dans au moins une couche de couverture (dans la zone d'épaisseur entre ladite face extérieure du support et ladite sous-couche de marquage laser), entre la portion à effet optiquement variable et la portion dénuée de marquage à effet optiquement variable, l'invention permet de s'affranchir de ces problèmes en procurant un marquage laser de personnalisation d'excellente qualité, parfaitement contrasté, et pouvant être rendu au moins sensiblement homogène.

La portion à effet optiquement variable peut être constituée d'une seule partie (aplat sur une partie de surface de la face extérieure) ou de plusieurs parties distinctes, contiguës ou disjointes (plusieurs motifs adjacents ou séparés). Quoi qu'il en soit, la face extérieure n'est pas entièrement couverte d'un aplat à effet optiquement variable et présente au moins une séparation entre au moins un marquage à effet optiquement variable et une portion dénuée de marquage à effet optiquement variable.

Un support de données selon l'invention permet donc de réaliser un marquage laser à chevauchement d'au moins une séparation entre la portion à effet optiquement variable et la portion dénuée de marquage à effet optiquement variable, ce marquage laser pouvant être rendu homogène, en tout cas parfaitement lisible par l'homme ou par un dispositif de lecture malgré la présence de cette séparation.

Ainsi avantageusement et selon l'invention, chaque marquage à effet optiquement variable est disposé par rapport à la sous-couche de marquage laser de telle sorte que ladite sous-couche de marquage laser s'étend en regard d'au moins une séparation entre la portion à effet optiquement variable et la portion dénuée de marquage à effet optiquement variable.

En outre, avantageusement et selon l'invention lesdites compositions en au moins un agent de marquage sensible audit rayonnement laser sont choisies de façon que le marquage laser obtenu sous l'effet dudit rayonnement laser, tel qu'apparaissant de ladite face extérieure, soit au moins sensiblement homogène, sur toute la surface de la face extérieure, y compris de part et d'autre de chaque séparation entre la portion à effet optiquement variable et la portion dénuée de marquage à effet optiquement variable.

L'invention permet donc d'obtenir un marquage laser de personnalisation d'excellente qualité parfaitement contrasté bien que ce marquage laser de personnalisation puisse être partiellement couvert par un marquage optiquement variable, et donc couvert par une limite de séparation d'un tel marquage. Il est à noter à ce titre que le fait qu'au moins une séparation entre la portion à effet optiquement variable et la portion dénuée de marquage à effet optiquement variable couvre un marquage laser de personnalisation réalisé dans la sous-couche de marquage laser permet d'augmenter considérablement la sécurité qui découle du marquage à effet optiquement variable (par rapport à un simple aplat qui recouvre l'intégralité du marquage laser dont la suppression et la reproduction sont beaucoup plus faciles).

Dans certains modes de réalisation, avantageusement et selon l'invention, ladite portion dénuée de marquage à effet optiquement variable est dénuée d'agent de marquage sensible audit rayonnement laser, au moins un agent de marquage sensible audit rayonnement laser étant incorporé dans au moins une couche de couverture uniquement dans ladite portion à effet optiquement variable. La teneur en au moins un agent de marquage sensible audit rayonnement laser dans chaque couche de couverture en regard de ladite portion à effet optiquement variable est choisie de façon à ce que le marquage laser dans la sous-couche de marquage laser produise ensuite, vu de la face extérieure à travers ladite portion à effet optiquement variable, un effet correspondant -notamment au moins sensiblement identique- à l'effet produit vu de la face extérieure à travers ladite portion dénuée de marquage à effet optiquement variable. Dans ces modes de réalisation ladite teneur en au moins un agent de marquage sensible audit rayonnement laser en regard de ladite portion dénuée de marquage à effet optiquement variable consiste donc en une absence d'agent de marquage sensible audit rayonnement laser.

Rien n'empêche en variante de prévoir qu'au moins une couche de couverture comprenne aussi au moins un agent de marquage sensible audit rayonnement laser en regard de ladite portion dénuée de marquage à effet optiquement variable, la teneur en au moins un agent de marquage sensible audit rayonnement laser en regard de ladite portion dénuée de marquage à effet optiquement variable étant alors différente de celle en regard de ladite portion à effet optiquement variable.

Dans certains modes de réalisation, avantageusement et selon l'invention, au moins une couche de couverture incorporant au moins un agent de marquage sensible audit rayonnement laser et au moins une couche de couverture comprenant au moins un marquage à effet optiquement variable sont optiquement superposées. Dans certains de ces modes de réalisation, l'ajustement de la teneur en au moins un agent de marquage sensible du rayonnement laser est réalisé par adjonction d'une couche supplémentaire dédiée à cet ajustement et optiquement superposée, du côté de la sous-couche de marquage laser ou de préférence du côté de la face extérieure, à au moins une couche de couverture comprenant au moins un marquage à effet optiquement variable.

En variante ou en combinaison, dans certains modes de réalisation de l'invention, au moins un agent de marquage sensible audit rayonnement laser est incorporé à au moins une couche de couverture comprenant au moins un marquage à effet optiquement variable. Ainsi, une même couche de couverture peut comporter à la fois un marquage à effet optiquement variable et un agent de marquage sensible audit rayonnement laser permettant de renforcer le contraste dudit marquage laser.

Tout agent de marquage sensible au rayonnement laser de marquage peut être utilisé dans un procédé et un support de données selon l'invention. De préférence, chaque agent de marquage sensible au rayonnement laser incorporé dans une couche de couverture d'un support de données selon l'invention est choisi pour procurer un marquage au moins sensiblement de même nature (couleur, teinte, intensité...) que celui produit par la sous-couche de marquage laser. En particulier, lorsque le marquage produit par la sous-couche de marquage laser est un marquage foncé et/ou noir, chaque agent de marquage sensible au rayonnement laser incorporé dans une couche de couverture est choisi pour produire un marquage également foncé et/ou noir.

Avantageusement, dans un procédé selon l'invention chaque couche de couverture et la sous-couche de marquage laser sont laminées à chaud et sous pression après réalisation de chaque marquage à effet optiquement variable. Typiquement, lorsque les différentes couches constitutives dudit support de données sont principalement constituées de polycarbonate, la lamination à chaud et sous pression est effectuée à une température supérieure à 120° C, notamment de l'ordre de 150° C à 200° C ; et à une pression supérieure à 10⁶ Pa, notamment de l'ordre de 2.10⁶ Pa.

Par contre, le marquage laser est réalisé par application du rayonnement laser sur la face extérieure du support de données après ladite lamination à chaud et sous pression, notamment en tant qu'étape finale de marquage de personnalisation sur un site distinct permettant d'obtenir un document officiel.

L'incorporation d'au moins un marquage à effet optiquement variable dans au moins une couche de couverture peut faire l'objet de nombreux modes de réalisation différents. Avantageusement et selon l'invention, au moins un marquage à effet optiquement variable est imprimé avec une composition d'encre sur au moins une face d'une couche de couverture en matériau thermoplastique laminée ensuite à chaud et sous pression conjointement avec les autres couches constitutives du support de données. Toute technique d'impression peut être utilisée à cet effet, notamment choisie parmi la sérigraphie, l'héliogravure, la flexographie, l'impression offset, ou autre. La composition d'encre comprend au moins un agent produisant un effet optiquement variable, notamment choisi parmi les pigments iridescents, les pigments interférentiels, et les cristaux liquides.

Différentes variantes de réalisation peuvent être envisagées en ce qui concerne les longueurs d'onde du rayonnement laser de marquage, et de visualisation ou d'observation des différents marquages, notamment selon la nature du marquage laser et le niveau de sécurité (premier, deuxième ou troisième niveau) recherché. Dans certains modes de réalisation, un support de données selon l'invention est avantageusement caractérisé en ce que chaque couche de couverture est transparente dans le domaine visible des longueurs d'onde, et en ce que la sous-couche de marquage laser est adaptée pour produire un marquage dans le domaine visible des longueurs d'onde sous l'effet dudit rayonnement laser.

L'invention s'étend à un document officiel comprenant un support de données selon l'invention dont au moins une face extérieure présente au moins un marquage laser -notamment un marquage laser de personnalisation-. Elle s'étend en particulier à un document officiel constitué d'un support de données selon l'invention ayant fait l'objet d'un marquage laser -notamment d'un marquage laser de personnalisation-.

Dans certains modes de réalisation avantageux, un document officiel conforme à l'invention est aussi caractérisé en ce qu'au moins un marquage laser est optiquement superposé à au moins une séparation entre au moins un marquage à effet optiquement variable et la portion dénuée de marquage à effet optiquement variable, et en ce que ledit marquage laser est au moins sensiblement homogène tel qu'apparaissant de ladite face extérieure.

Un document officiel selon l'invention peut notamment être choisi dans le groupe formé des passeports, des feuilles de passeport, des fiches douanières, des visas, des cartes d'identité, des permis de conduire, des cartes d'immatriculation de véhicules (cartes grises), des cartes bancaires, des cartes de fidélité, des chèques bancaires, des diplômes, des certificats, des titres de transport, des cartes de contrôle d'accès, des badges, des étiquettes, des actes légaux, des contrats, des registres légaux, des plans cadastraux, des documents fiduciaires, des billets de banque, des emballages et des plans de fabrication.

L'invention concerne ; un procédé de fabrication , tel que revendiqué dans la revendication 1 ; un support de données , tel que revendiqué dans la revendication 7 et un document officiel, tel que revendiqué dans la revendication 11.

D'autres buts, caractéristiques et avantages de l'invention apparaîtront à la lecture de la description suivante de différents modes de réalisation de l'invention donnés à titre non limitatif, et qui se réfère aux figures annexées dans lesquelles :
- la figure 1 est une vue schématique de dessus d'un exemple de support de données conforme à l'invention,
- la figure 2 est une vue schématique partielle en coupe d'un support de données selon un premier mode de réalisation de l'invention,
- la figure 3 est une vue schématique de dessus d'un exemple de document officiel selon l'invention obtenu après marquage laser du support de données de la figure 1,
- la figure 4 est une vue schématique partielle en coupe d'un document officiel selon l'invention obtenu après marquage laser du support de données de la figure 2,
- la figure 5 est une vue schématique partielle en coupe d'un support de données selon un deuxième mode de réalisation de l'invention,
- la figure 6 est une vue schématique partielle en coupe d'un document officiel selon l'invention obtenu après marquage laser du support de données de la figure 5,
- la figure 7 est une vue schématique partielle en coupe d'un support de données selon un troisième mode de réalisation de l'invention,
- la figure 8 est une vue schématique partielle en coupe d'un document officiel selon l'invention obtenu après marquage laser du support de données de la figure 7.

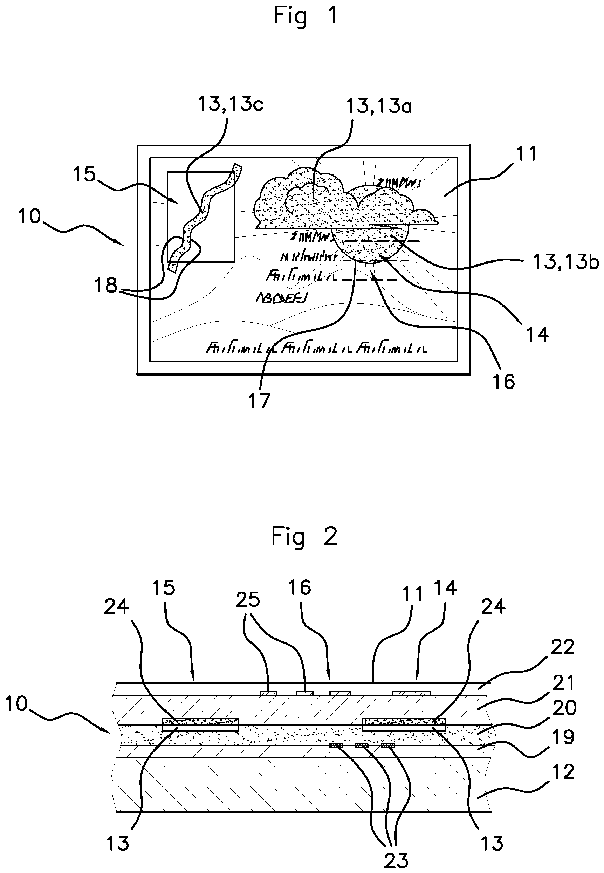

Sur les figures, les échelles et les dimensions relatives ne sont pas respectées, à des fins d'illustration. En particulier, sur les figures 2, 4, 5 à 8 les épaisseurs sont exagérément agrandies.

La figure 1 représente un exemple de support 10 de données selon l'invention prêt à l'emploi pour pouvoir faire l'objet d'un marquage laser de personnalisation en vue de l'obtention d'un document officiel selon l'invention. Ce support 10 de données est formé d'un empilement d'une pluralité de couches superposées les unes sur les autres et ayant fait l'objet d'une lamination à chaud et sous pression. La majorité, voire la totalité, des couches est de préférence formée d'un matériau thermoplastique, notamment choisi parmi les polycarbonates, les PVC, les polyesters (polyéthylène téréphtalate PET, polyéthylène téréphtalate glycol PETG), les films co-extrudés de polyester et de polycarbonate (PEC), les papiers synthétiques, leurs mélanges et leurs associations. Dans certains modes de réalisation avantageux, notamment pour les applications de type carte bancaire, carte d'identification ou carte de transport, le support 10 de données est formé d'une pluralité de couches en polycarbonate. Rien n'empêche que le support de données incorpore des couches de matériaux différents, y compris des couches dans une matière autre qu'un matériau thermoplastique, par exemple en papier. Le nombre total de couches constituant un support 10 de données selon l'invention n'a pas d'importance dans le cadre de la présente invention.

Le support 10 de données se présente sous la forme générale d'une feuille ou d'une carte et présente donc deux faces principales externes planes opposées, et une épaisseur relativement faible. Dans toute la suite, seule une face principale, dite face 11 extérieure, est décrite et présente les caractéristiques de l'invention, étant entendu que l'autre face principale peut tout aussi bien présenter les mêmes caractéristiques, ou au contraire présenter d'autres caractéristiques. En conséquence, il est supposé dans toute la suite que la face opposée à la face 11 extérieure considérée est une face principale externe d'un fond 12 représenté sur les figures en coupe, sans que cela implique une quelconque limitation, un tel fond 12 pouvant ne pas être présent et/ou étant constitué lui-même d'une couche ou d'une pluralité de couches plus ou moins épaisse(s) non décrite(s) dans la présente description.

En particulier le fond 12 peut être formé d'au moins une couche en matériau thermoplastique choisi parmi les polycarbonates, les PVC, les polyesters (polyéthylène téréphtalate PET, polyéthylène téréphtalate glycol PETG), les films co-extrudés de polyester et de polycarbonate (PEC), les papiers synthétiques (notamment choisis parmi le papier commercialisé sous la marque Teslin® par la société PPG, Monroeville, USA, le papier commercialisé sous la marque Neobond® par la société Neenah Lahnstein, Lahnstein, Allemagne, et le papier commercialisé sous la marque Polyart® par la société Arjobex, Boulogne, France), leurs mélanges et leurs associations. D'autres exemples sont possibles.

La face 11 extérieure du support 10 de données présente différents marquages représentant des informations (mentions communes) et/ou constituant des marquages de sécurité destinés à renforcer la résistance aux tentatives de falsification et/ou à empêcher la reproduction par lecture optique. Le support 10 de données comprend en particulier au moins un marquage 13 à effet optiquement variable, à savoir dans l'exemple représenté un marquage 13a sous forme d'un nuage, un marquage 13b sous forme d'un soleil chevauchant un emplacement 14 destiné à recevoir des textes de personnalisation (nom, prénom...) par marquage laser, et un marquage 13c sous forme d'un ruban ondulé traversant un emplacement 15 destiné à recevoir une photographie d'identité par marquage laser. Le support 10 de données n'étant pas personnalisé aux emplacements 14, 15 notamment ne sont pas complétés par des mentions variables.

Les marquages 13 à effet optiquement variable peuvent être formés par impression d'une encre à pigments interférentiels et/ou par impression d'une encre à pigments iridescents et/ou par impression d'une encre à pigments à cristaux liquides. Les marquages 13 à effet optiquement variable ne couvrent pas la totalité de la surface de la face 11 extérieure, cette dernière présentant donc une portion dotée de ces marquages 13 à effet optiquement variable, et une autre portion 16 dénuée de tout marquage à effet optiquement variable. Il est à noter que l'emplacement 14 destiné à recevoir des textes de personnalisation s'étend optiquement superposé à l'un au moins 13 des marquages à effet optiquement variable et à au moins une partie de ladite portion 16 dénuée de marquage à effet optiquement variable. Ainsi, le marquage 13b à effet optiquement variable représentant un soleil est délimité par un bord inférieur 17 qui forme une séparation entre ce marquage 13b à effet optiquement variable et la portion 16 dénuée de marquage à effet optiquement variable, et ce bord 17 de séparation est optiquement superposé à l'emplacement 14 destiné à recevoir des textes de personnalisation par marquage laser. De même, les marquages 13c à effet optiquement variable représentant un ruban présente des bords latéraux 18 formant des séparations entre ce marquage et la portion 16 dénuée de marquage à effet optiquement variable, ces bords 18 latéraux étant optiquement superposés à l'emplacement 15 destiné à recevoir une photographie d'identification par marquage laser.

Les marquages 13 à effet optiquement variable peuvent être réalisés par exemple en au moins une étape d'impression avec une composition d'impression comprenant un pigment choisi dans le groupe formé des pigments interférentiels de couleur verte (Xirallic ®, T60-24SW, stellar green, commercialisé par la société Merck, Dramstadt, Allemagne), des pigments interférentiels de couleur bleu (Xirallic ® T60-23SW, galaxy blue commercialisé par la société Merck, Dramstadt, Allemagne), des pigments interférentiels de couleur rouge (Xirallic ®, T60-21SW, solaris red commercialisé par la société Merck, Dramstadt, Allemagne), et des pigments interférentiels de couleur jaune (Xirallic ® T60-20SW, sunbeam gold commercialisé par la société Merck, Dramstadt, Allemagne).

L'invention permet de prendre en compte le fait que contrairement à ce qu'indique l'état de la technique, un marquage laser de personnalisation effectué à travers un marquage 13 à effet optiquement variable ne présente pas les mêmes caractéristiques qu'un marquage laser de personnalisation effectué à travers la portion 16 dénuée de marquage à effet optiquement variable. En effet, les marquages 13 à effet optiquement variable produisent en majorité un une atténuation relativement importante du marquage laser, atténuation qui varie elle-même selon les caractéristiques du marquage 13 à effet optiquement variable, notamment en fonction de la nature des pigments utilisés et de leur couleur.

Dans le mode de réalisation représenté figure 2, le support 10 de données comprend à partir du fond 12 :
- une couche 19 de base, qui peut par exemple être formée d'un aplat de couleur blanche opaque (contrastant avec toutes les inscriptions colorées, foncées ou en noir optiquement superposé à cette couche 19 de base du côté de la face 11 extérieure),
- une sous-couche 20 de marquage laser sensible à un rayonnement laser de marquage, notamment à un rayonnement laser infrarouge, par exemple à 1064 nm, de façon à permettre la production d'un marquage dans au moins une partie d'épaisseur de cette sous-couche 20 de marquage laser sous l'effet de ce rayonnement laser appliqué à partir de la face 11 extérieure,

- une première couche 21 de couverture placée à recouvrement et au contact de la totalité de la surface de la sous-couche 20 de marquage laser,
- une deuxième couche 22 de couverture faisant office de protection appliquée au-dessus de la première couche 21 de couverture, et donc également placée à recouvrement de la sous-couche 20 de marquage laser, c'est-à-dire optiquement superposée à cette dernière. La face 11 extérieure est formée par la dernière couche 22 de couverture.

La sous-couche 20 de marquage laser peut s'étendre sous forme d'un aplat continu au format de la face 11 extérieure (à l'exception d'un éventuel retrait périphérique) ; ou au contraire être appliquée sous forme d'une pluralité de portions distinctes et disjointes, au moins en regard des emplacements 14, 15 destinés à recevoir un marquage laser, ou uniquement en regard de ces emplacements 14, 15. Elle peut être formée d'une épaisseur d'un vernis imprimé avec une composition d'encre incorporant un agent de marquage sensible au rayonnement laser, par exemple choisi dans le groupe comprenant le noir de carbone nanonisé 95nm commercialisé sous la référence lamp black 101 par la société la Degussa, Essen, Allemagne, les additifs décrits dans WO2004/50766 et WO2004/50767, les additifs commercialisés sous la marque Micab® par la société DSM, Heerlen, Pays-Bas, les particules de mica (silicate) recouvertes d'oxyde d'étain dopé antimoine comme décrit dans DE19522397, les additifs commercialisés sous la marque IRIOTEC série 8000® par la société Merck, Dramstadt, Allemagne, une poudre d'oxydes mixtes calcinés de co-précipité d'étain et d'antimoine comme décrit dans US 6693657, les additifs commercialisés sous la marque Mark-it® par la société BASF, Ludwigshafen, Allemagne, et les oxydes mélangés de cuivre ou d'étain contenant du phosphore décrits dans WO2006/042714. Cela étant, l'invention s'applique à tous les modes de réalisation possibles d'une telle sous-couche 20 de marquage laser dès lors qu'elle est susceptible de produire un marquage contrasté, foncé, noir ou éventuellement coloré, sous l'effet du rayonnement laser. Rien n'empêche en particulier que la sous-couche 20 de marquage laser soit elle-même constituée d'une pluralité d'épaisseurs distinctes. La sous-couche 20 de marquage laser peut aussi être choisie parmi les films commercialisés prêts à être marqués par laser, par exemple un film commercialisé sous la référence Makrofol® ID 6-2 laserable par la société Bayer Materials Science, Leverkusen, Allemagne.

Chaque couche 21, 22 de couverture peut être formée par exemple d'un matériau thermoplastique, notamment choisi parmi les polycarbonates, les PVC, les polyesters (polyéthylène téréphtalate PET, polyéthylène téréphtalate glycol PETG), et les films co-extrudés de polyester et de polycarbonate (PEC).

Dans l'exemple représenté, la couche 19 de base présente des inscriptions 23 imprimées (mentions communes et/ou de sécurité). Les marquages 13 à effet optiquement variable sont imprimés sous forme de motifs sur la face de la première couche 21 de couverture venant au contact de la sous-couche 20 de marquage laser. Ces marquages 13 à effet optiquement variable sont cependant imprimés exactement optiquement superposés à des motifs 24 de formes exactement identiques imprimés sur cette même face de la première couche 21 de couverture avec une encre contenant un agent de marquage sensible au rayonnement laser.

Ces motifs 24 peuvent être imprimés avec une composition d'encre contenant au moins un agent absorbant la longueur d'onde du laser de marquage utilisé. Un tel agent de marquage sensible au rayonnement laser peut être choisi notamment dans le groupe comprenant le noir de carbone nanonisé 95nm commercialisé sous la référence lamp black 101 par la société Degussa, Essen, Allemagne, les additifs décrits dans WO2004/50766 et WO2004/50767, les additifs commercialisés sous la marque Micab® par la société DSM, Heerlen, Pays-Bas, les particules de mica (silicate) recouvertes d'oxyde d'étain dopé antimoine comme décrit dans DE19522397, les additifs commercialisés sous la marque IRIOTEC série 8000® par la société Merck, Dramstadt, Allemagne, une poudre d'oxydes mixtes calcinés de co-précipité d'étain et d'antimoine comme décrit dans US 6693657, les additifs commercialisés sous la marque Mark-it® par la société BASF, Ludwigshafen, Allemagne, et les oxydes mélangés de cuivre ou d'étain contenant du phosphore décrits dans WO2006/042714.

De très bons résultats ont été obtenus avec une encre contenant du noir de carbone nanonisé (invisible en lumière visible) tel que commercialisé sous la référence lamp black 101 et/ou sous la marque Flamrub® par la société Degussa, Essen, Allemagne, et avec les additifs commercialisés sous la marque IRIOTEC série 8000® par la société Merck, Dramstadt, Allemagne. La composition d'encre est choisie par ailleurs pour être compatible avec l'impression sur la couche 21 de couverture et avec son matériau constitutif, et avec la lamination à chaud et sous pression des différentes couches constitutives du support 10 de données.

En conséquence, les motifs 24 sont sensibles au rayonnement laser de marquage et sont exactement optiquement superposés aux motifs des marquages 13 à effet optiquement variable. Avec l'exemple de la figure 1, cela signifie que les motifs 24 comportent un nuage, un soleil, et un ruban ondulé exactement de la même forme que les marquages 13a, 13b, 13c et optiquement superposés à ces derniers.

Dans le mode de réalisation représenté figure 2, les motifs 24 sensibles au rayonnement laser de marquage sont disposés au-dessus des marquages 13 à effet optiquement variable, c'est-à-dire du côté de la face 11 extérieure. Rien n'empêche au contraire de prévoir (variante non représentée) que les motifs 24 sensibles au rayonnement laser de marquage soient disposés au-dessous des marquages 13 à effet optiquement variable, c'est-à-dire du côté de la sous-couche 20 de marquage laser.

Dans l'exemple représenté figure 2, la deuxième couche 22 de couverture comporte des marquages 25 de sécurité qui peuvent être imprimés sur la face de cette deuxième couche 22 de couverture venant au contact de la première couche 21 de couverture. D'autres motifs et d'autres marquages peuvent bien entendu être incorporés dans le support 10 de données à tout endroit approprié.

Le procédé de fabrication du support de données de la figure 2 comprend les étapes successives suivantes :
- les inscriptions 23 sont imprimées sur la couche 19 de base,
- les motifs 24 sensibles au rayonnement laser sont imprimés sur une face de la première couche 21 de couverture avec une composition d'encre comprenant un agent de marquage sensible au rayonnement laser, par exemple du noir de carbone nanonisé,
- les marquages 13 à effet optiquement variable sont imprimés superposés aux motifs 24 sur la même face de la première couche 21 de couverture avec au moins une composition d'encre comprenant des pigments à effet optiquement variable, par exemple des pigments interférentiels ; en particulier, chaque marquage 13 peut être formé d'une image polychromatique comme décrit par FR 2957554 (ou commercialisée sous les marques OVTek® ou Imagram® par la société Fasver, Baillargues, France), et est donc réalisé en plusieurs étapes successives d'impression ;
- les marquages 25 de sécurité sont imprimés sur la deuxième couche 22 de couverture ;
- les différentes couches 12, 19, 20, 21 et 22 sont empilées les unes sur les autres avec la sous-couche 20 de marquage laser interposée entre la couche 19 de base et la première couche 21 de couverture, et laminées à chaud et sous pression dans une presse de lamination, l'épaisseur totale de l'empilement diminuant par exemple d'environ 10 %, pour obtenir le support de données tel que représenté figure 2, prêt à l'emploi pour subir un marquage de personnalisation par rayonnement laser.

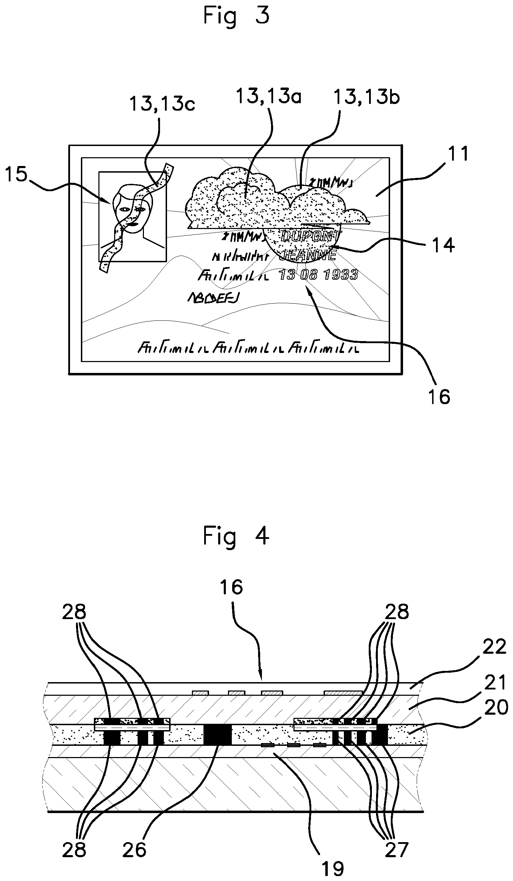

La figure 3 représente un exemple de marquage laser de personnalisation réalisé sur le support 10 de données de la figure 1. Dans cet exemple, les marquages laser de personnalisation comprennent les textes "DUPONT", "JEANNE", "13081933" inscrits dans l'emplacement 14, et une photographie inscrite dans l'emplacement 15. Le rayonnement laser de marquage peut être effectué par exemple avec un laser Nd YAG à 1064 nm de référence IXLA-XP24 commercialisé par la société IXLA, Arry, Italie. D'autres exemples sont possibles.

Le marquage 13b à effet optiquement variable en forme de soleil chevauche partiellement l'emplacement 14 formé par la sous-couche 20 de marquage laser ; le marquage 13c à effet optiquement variable en forme de ruban ondulé chevauche partiellement l'emplacement 15 formé par la sous-couche 20 de marquage laser ; la portion 16 dénuée de marquage à effet optiquement variable chevauche également partiellement les emplacements 14, 15 formés par la sous-couche 20 de marquage laser.

Comme on le voit figure 4, dans la portion 16 dénuée de marquage à effet optiquement variable, le rayonnement laser de marquage produit des marquages 26 qui s'étendent uniquement dans l'épaisseur de la sous-couche 20 de marquage laser. Par contre, dans la portion à effet optiquement variable de la face 11 extérieure, le rayonnement laser de marquage produit non seulement des marquages 27 qui s'étendent dans l'épaisseur de la sous-couche 20 de marquage laser, mais également des marquages 28 dans les motifs 24 optiquement superposés aux marquages 13 à effet optiquement variable, ces marquages 28 étant optiquement superposées aux marquages 27 sous-jacents. Il en résulte que les différents marquages laser ainsi formés sont homogènes, et visibles avec au moins sensiblement le même contraste dans leur zone optiquement superposée à un marquage à effet optiquement variable et dans leur zone appartenant à la portion 16 dénuée de marquage à effet optiquement variable, comme cela est représenté schématiquement figure 3.

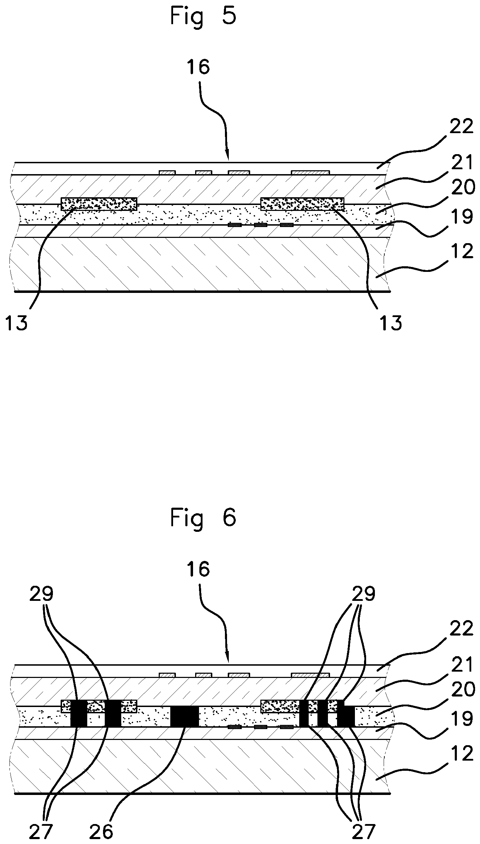

Les figures 5 et 6 représentent un autre mode de réalisation de l'invention dans lequel les marquages 13 à effet optiquement variable sont imprimés sur la première couche 21 de couverture avec une composition d'encre qui incorpore un agent de marquage sensible au rayonnement laser, par exemple du noir de carbone nanonisé. Ce mode de réalisation permet d'éviter les deux étapes d'impression du premier mode de réalisation. Lors de l'application du rayonnement laser, des marquages 29 sont réalisés dans toute l'épaisseur des marquages 13 à effet optiquement variable, optiquement superposés aux marquages 27 produits par le rayonnement laser dans la sous-couche 20 de marquage laser.

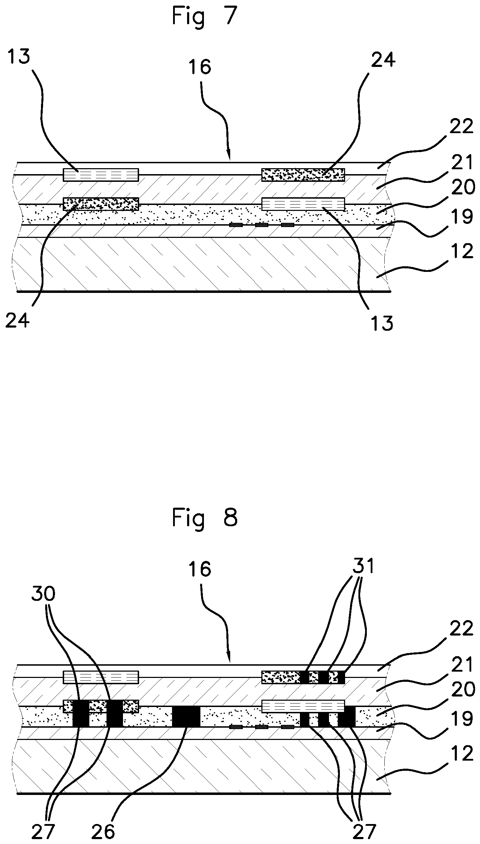

Les figures 7 et 8 représentent un troisième mode de réalisation de l'invention qui diffère du premier mode de réalisation par le fait que les motifs 24 incorporant au moins un agent de marquage sensible au rayonnement laser et les marquages 13 à effet optiquement variable ne sont pas imprimés les uns au-dessus des autres, mais sont au contraire imprimé sur des faces différentes, soit sur les deux faces opposées de la première couche 21 de couverture, soit sur une face de la première couche 21 de couverture et, respectivement, sur une face de la deuxième couche 22 de couverture.

Dans l'exemple représenté, un premier marquage 13 à effet optiquement variable est interposé entre la première couche 21 de couverture et la deuxième couche 22 de couverture, ce premier marquage 13 pouvant être réalisé par impression sur la face de la première couche 21 de couverture orientée vers la face 11 extérieure. Ce premier marquage 13 à effet optiquement variable est optiquement superposé à un premier motif 24 imprimé sur la face de la première couche 21 de couverture orientée vers la sous-couche 20 de marquage laser, ce premier motif 24 se trouvant donc interposé entre la première couche 21 de couverture et la sous-couche 20 de marquage laser. Après application du rayonnement laser, les marquages 27 produits par le laser dans la sous-couche 20 de marquage laser sont optiquement superposés à des marquages 30 identiques réalisés dans l'épaisseur dudit premier motif 24.

Un deuxième marquage 13 à effet optiquement variable est interposé entre la première couche 21 de couverture et la sous-couche 20 de marquage laser, ce deuxième marquage 13 pouvant être réalisé par impression sur la face de la première couche 21 de couverture orientée vers la sous-couche 20 de marquage laser. Ce deuxième marquage 13 à effet optiquement variable est optiquement superposé à un deuxième motif 24 imprimé sur la face de la première couche 21 de couverture orientée vers la face 11 extérieure, ce deuxième motif 24 se trouvant donc interposé entre la première couche 21 de couverture et la deuxième couche 22 de couverture. Après application du rayonnement laser, les marquages 27 produits par le laser dans la sous-couche 20 de marquage laser sont optiquement superposés à des marquages 31 identiques réalisés dans l'épaisseur dudit deuxième motif 24.

De nombreux autres modes de réalisation sont possibles. En particulier, les motifs 24 incorporant au moins un agent de marquage sensible au rayonnement laser peuvent être réalisés non pas strictement identiques aux marquages 13 à effet optiquement variable, mais uniquement selon les parties des marquages 13 à effet optiquement variable optiquement superposées à la sous-couche 20 de marquage laser sous-jacente. En effet, dans les parties des marquages 13 à effet optiquement variable qui ne sont pas optiquement superposées à la sous-couche 20 de marquage laser (ou qui ne sont pas destinées à être optiquement superposées à un marquage laser), la présence d'un agent de marquage sensible au rayonnement laser n'est pas nécessaire.

Dans d'autres modes de réalisation non représentés, il est possible de prévoir une couche de couverture entièrement constituée par impression en aplat d'une composition comprenant au moins un agent de marquage sensible au rayonnement laser, la proportion en agent de marquage sensible au rayonnement laser étant plus importante dans la portion de la face 11 extérieure à effet optiquement variable optiquement superposée à la sous-couche 20 de marquage laser, que dans la portion 16 dénuée de marquage à effet optiquement variable et optiquement superposée à la sous-couche 20 de marquage laser. Pour ce faire, il est possible par exemple de réaliser plusieurs impressions successives, l'une en aplat, l'autre selon un motif correspondant aux marquages 13 à effet optiquement variable, au moins dans leur partie optiquement superposée à la sous-couche 20 de marquage laser. Dans ces modes de réalisation, la portion 16 dénuée de marquage à effet optiquement variable incorpore donc également une certaine proportion d'agent de marquage sensible au rayonnement laser, les produits donc, sous l'effet du rayonnement laser, des marquages optiquement superposés aux marquages réalisés dans la sous-couche 20 de marquage laser. Par ailleurs, il est possible de faire varier la proportion en agent de marquage sensible au rayonnement laser et/ou la nature de l'agent de marquage sensible au rayonnement laser dans les motifs 24 optiquement superposés à la sous-couche 20 de marquage laser en fonction de la nature et/ou de la densité du marquage 13 à effet optiquement variable, notamment selon l'atténuation du marquage laser produite par les différents marquages 13 à effet optiquement variable.

Dans tous les modes de réalisation, les couches de couverture recouvrant la sous-couche 20 de marquage laser doivent, au moins dans les emplacements 14, 15 destinés à recevoir de tels marquages, être transparentes d'une part au rayonnement laser de marquage (notamment dans le domaine infrarouge en particulier pour la longueur d'onde de 1064 nm), et doivent également être transparentes aux longueurs d'onde d'observation de ces marquages, c'est-à-dire dans le domaine visible pour des marquages de personnalisation ou de sécurité de premier niveau destinés à être visualisés à l'œil ; ou dans le spectre d'excitation (marquage photoluminescents) et d'observation d'un dispositif de lecture optique (par exemple dans le domaine visible et/ou dans le domaine des ultraviolets) s'il s'agit de marquages de sécurité de deuxième ou troisième niveau.

L'invention permet une amélioration du contraste du marquage laser par la présence d'au moins un agent de marquage sensible au rayonnement laser dans au moins une couche 21, 22 de couverture dans une zone optiquement superposée à un marquage 13 à effet optiquement variable et à au moins une partie de la sous-couche 20 de marquage laser.

### EXEMPLE

Sur une des faces de deux feuilles de polycarbonate de 100µm d'épaisseur de la marque Makrofol® ID 6-2 laserable commercialisées par la société Bayer Materials, Leverkusen, Allemagne, on imprime des motifs 24 avec un vernis commercialisé sous la référence LG110606 par la société Tiflex, Poncin, France contenant 1 % de noir de carbone nanonisé 95nm commercialisé sous la référence lamp black 101 par la société la Degussa, Essen, Allemagne. Ce vernis est imprimé en maille 120 fils/cm.

Par-dessus ces motifs 24 (conformément au premier mode de réalisation des figures 2 et 3 décrit ci-dessus), on imprime des images transparentes en lumière visible polychromatiques iridescentes comme décrit par FR2957554, formant des marquages 13 à effet optiquement variables représentant exactement les mêmes signes que les motifs 24 précédemment imprimés (par exemple un nuage, un soleil et un ruban ondulé comme représenté figure 1).

Chaque image polychromatique iridescente est imprimée en vitrophanie en imprimant successivement par sérigraphie deux images filtrées monochromatiques. Chaque écran sérigraphique est réalisé, à partir d'un tissu dont la maille comprend 120 fils/cm, les fils ayant des diamètres de 34µm.

On prépare une première composition d'impression comprenant 20 % en poids d'une poudre formée de particules d'un pigment interférentiel de couleur bleu (Xirallic ® T60-21SW, galaxy blue, Merck Dramstadt, Allemagne) dispersée dans un milieu liquide d'impression (commercialisé sous la référence LG110606 par la société Tiflex, Poncin, France). On prépare en parallèle une deuxième composition d'impression comprenant 20 % en poids d'une poudre formée de particules d'un pigment interférentiel de couleur verte (Xirallic ®, T60-24SW, stellar green, Merck Dramstadt, Allemagne) dispersée dans le même liquide d'impression (LG110606, Tiflex, Poncin, France).

Les feuilles de polycarbonate ainsi imprimées sont associées à trois autres feuilles de polycarbonate interposées entre les feuilles de polycarbonate imprimées de façon à former un empilement, les faces imprimées étant placées au contact des feuilles sous-jacentes de l'empilement, c'est-à-dire ne constituant pas les faces extérieures de ce dernier. Les cinq feuilles de polycarbonate formant, avec les deux feuilles imprimées, ledit empilement sont successivement les suivantes : une feuille de 100 µm de polycarbonate transparent ; une feuille de 200 µm de polycarbonate blanc, une feuille de 200 µm de polycarbonate blanc ; une feuille de 200 µm de polycarbonate blanc, une feuille de 100 µm de polycarbonate transparent.

L'ensemble des feuilles formant cet empilement est laminé dans une presse de lamination dans les conditions suivantes :
- 1 min de montée à 180°C
- 12 min à 180°C sous 30N/cm²
- 5 min à 180°C sous 150 N/cm²
- refroidissement à 26°C pendant 17,5 min sous 180N/cm².

On obtient un support 10 de données sous forme d'une carte dont l'épaisseur totale est égale à la somme des épaisseurs des feuilles de polycarbonate utilisées diminuée d'environ 10 %.

On réalise un marquage laser d'une photographie et d'un texte pour partie à travers les motifs 24 et les images polychromatique iridescentes 13 comme représenté figure 3, avec un laser Nd YAG à 1064 nm de référence IXLA - XP24 commercialisé par la société IXLA, Arry, Italie.

Les réglages utilisés sont les suivants :
Pour la photographie : vitesse 1250 mm/s ; fréquence 20KHz ; aucune puissance.
Pour le texte : puissance : 25W, vitesse : 1000 mm/s - fréquence : 30KHz.

On obtient une carte constituant un document officiel ; on constate que les marquages obtenus sous l'effet du rayonnement laser présentent sensiblement le même contraste à travers les images iridescentes et dans la portion dénuée d'image iridescente.

L'objet de l'invention est défini par la portée des revendications annexées. D'autres modifications qui pourraient être envisagées, pour autant qu'elles entrent dans le cadre desdites revendications, pourraient être notamment que le rayonnement laser utilisé pour le marquage peut être différent d'un rayonnement laser à 1064 nm, et que le nombre de couches de couverture recouvrant la sous-couche de marquage laser peut être quelconque, réduit à 1. Les différents marquages peuvent faire l'objet de nombreuses variantes de réalisation pour autant, comme indiqué précédemment, que celles-ci entrent dans le cadre desdites revendications.

## Revendications

1. Procédé de fabrication d'un support de données multicouche par lamination à chaud et sous pression d'un empilement d'une pluralité de couches superposées comprenant au moins une couche en au moins un matériau thermoplastique, susceptible d'être marqué sous l'effet d'un rayonnement laser appliqué sur au moins une face (11) extérieure de ce support de données, dans lequel :
- au moins une couche, dite couche (21, 22) de couverture :
∘ transparente à un rayonnement laser de marquage,
∘ s'étendant entre ladite face (11) extérieure et une couche, dite sous-couche (20) de marquage laser, sensible à ce rayonnement laser, de façon à permettre la production d'un marquage dans la sous-couche (20) de marquage sous l'effet de ce rayonnement laser traversant chaque couche (21, 22) de couverture,
∘ incorporant au moins un marquage (13) à effet optiquement variable disposé par rapport à la sous-couche de marquage laser de telle sorte que ladite face (11) extérieure présent une portion à effet optiquement variable optiquement superposée à au moins une partie de la sous-couche (20) de marquage laser et une portion (16) dénuée de marquage à effet optiquement variable optiquement superposée à au moins une partie de la sous-couche (20) de marquage laser,
**caractérisé en ce que** :
- ladite au moins une couche (21, 22) de couverture incorpore en outre au moins un agent de marquage sensible audit rayonnement laser de façon à permettre la production d'un marquage dans ladite au moins une couche (21, 22) de couverture sous l'effet de ce rayonnement laser,
- ladite portion (16) dénuée de marquage à effet optiquement variable et ladite portion à effet optiquement variable sont réalisées avec des teneurs en au moins un agent de marquage sensible audit rayonnement laser, entre ladite face (11) extérieure du support et ladite sous-couche (20) de marquage laser, qui sont différentes, et
- ladite portion (16) dénuée de marquage à effet optiquement variable est dénuée d'agent de marquage sensible audit rayonnement laser, au moins un agent de marquage sensible audit rayonnement laser étant incorporé dans au moins une couche (21, 22) de couverture uniquement dans ladite portion à effet optiquement variable.

2. Procédé selon la revendication 1, **caractérisé en ce que** chaque marquage (13) à effet optiquement variable est disposé par rapport à la sous- couche (20) de marquage laser de telle sorte que ladite sous-couche (20) de marquage laser s'étend en regard d'au moins une séparation (17, 18) entre la portion à effet optiquement variable et la portion (16) dénuée de marquage à effet optiquement variable.

3. Procédé selon la revendication 1 ou 2, **caractérisé en ce que** lesdites teneurs en au moins un agent de marquage sensible audit rayonnement laser sont choisies de façon que le marquage laser obtenu sous l'effet dudit rayonnement laser, tel qu'apparaissant de ladite face (11) extérieure, soit au moins sensiblement homogène.

4. Procédé selon l'une des revendications 1 à 3, **caractérisé en ce qu'**au moins une couche (21, 22) de couverture incorporant au moins une agent de marquage sensible audit rayonnement laser et au moins une couche (21, 22) de couverture comprenant au moins un marquage à effet optiquement variable sont optiquement superposées.

5. Procédé selon l'une des revendications 1 à 4, **caractérisé en ce qu'**au moins un agent de marquage sensible audit rayonnement laser est incorporé à au moins une couche (21, 22) de couverture comprenant au moins un marquage de laser à effet optiquement variable.

6. Procédé selon l'une des revendications 1 à 5, **caractérisé en ce que** chaque couche (21, 22) de couverture et la sous-couche (20) de marquage laser sont laminées à chaud et sous pression après la réalisation de chaque marquage à effet optiquement variable.

7. Support de données multicouche comprenant au moins une couche en au moins un matériau thermoplastique, susceptible d'être marqué sous l'effet d'un rayonnement laser appliqué sur au moins une face (11) extérieure de ce support de données, comprenant :
- au moins une couche, dite couche (21, 22) de couverture :
∘ transparente à un rayonnement laser de marquage,
∘ s'étendant entre ladite face (11) extérieure et une couche, dite sous-couche (20) de marquage laser, sensible à ce rayonnement laser, de façon à permettre la production d'un marquage dans la sous-couche (20) de marquage sous l'effet de ce rayonnement laser traversant chaque couche (21, 22) de couverture,
∘ incorporant au moins un marquage (13) à effet optiquement variable disposé par rapport à la sous-couche de marquage laser de telle sorte que ladite face (11) extérieure présent une portion à effet optiquement variable optiquement superposée à au moins une partie de la sous-couche (20) de marquage laser et une portion (16) dénuée de marquage à effet optiquement variable optiquement superposée à au moins une partie de la sous-couche (20) de marquage laser,
**caractérisé en ce que** :
- ladite au moins une couche (21, 22) de couverture incorpore en outre au moins un agent de marquage sensible audit rayonnement laser de façon à permettre la production d'un marquage dans ladite au moins une couche (21, 22) de couverture sous l'effet de ce rayonnement laser,
- ladite portion (16) dénuée de marquage à effet optiquement variable et ladite portion à effet optiquement variable sont réalisées avec des teneurs en au moins un agent de marquage sensible audit rayonnement laser, entre ladite face (11) extérieure du support et ladite sous-couche (20) de marquage laser, qui sont différentes, et
- ladite portion (16) dénuée de marquage à effet optiquement variable est dénuée d'agent de marquage sensible audit rayonnement laser, au moins un agent de marquage sensible audit rayonnement laser étant incorporé dans au moins une couche (21, 22) de couverture uniquement dans ladite portion à effet optiquement variable.

8. Support selon la revendication 7, **caractérisé en ce que** ladite sous-couche (20) de marquage laser s'étend en regard d'au moins une séparation (17, 18) entre la portion à effet optiquement variable et la portion (16) dénuée de marquage à effet optiquement variable.

9. Support selon l'une des revendications 7 ou 8, **caractérisé en ce que** lesdites teneurs en au moins un agent de marquage sensible audit rayonnement laser sont choisies de façon que le marquage laser obtenu sous l'effet dudit rayonnement laser, tel qu'apparaissant de ladite face (11) extérieure, soit au moins sensiblement homogène.

10. Support selon l'une des revendications 7 à 9, **caractérisé en ce que** chaque couche (21, 22) de couverture est transparente dans le domaine visible des longueurs d'onde, et **en ce que** la sous-couche (20) de marquage laser est adaptée pour produire un marquage dans le domaine visible des longueurs d'onde sous l'effet dudit rayonnement laser.

11. Document officiel comprenant un support de données selon l'une des revendications 7 à 10 dont au moins une face (11) extérieure présente au moins un marquage laser.

12. Document selon la revendication 11, **caractérisé en ce qu'**au moins un marquage laser est optiquement superposé à au moins une séparation (17, 18) entre au moins un marquage à effet optiquement variable et la portion dénuée de marquage à effet optiquement variable, et **en ce que** ledit marquage laser est au moins sensiblement homogène tel qu'apparaissant de ladite face (11) extérieure.

## Patentansprüche

1. Verfahren zur Herstellung eines Mehrschicht-Datenträgers durch Heiß- und Drucklaminieren eines Stapels aus einer Mehrzahl von übereinander gelagerten Schichten, der mindestens eine Schicht aus mindestens einem thermoplastischen Material umfasst, der dazu geeignet ist, unter der Wirkung einer Laserstrahlung markiert zu werden, die auf mindestens eine Außenseite (11) dieses Datenträgers angewandt wird, wobei:
- mindestens eine Schicht, die Deckschicht (21, 22):
∘ für eine Markierungslaserstrahlung transparent ist,
∘ sich zwischen der Außenseite (11) und einer Schicht, der Lasermarkierungs-Unterschicht (20), erstreckt, die für diese Laserstrahlung empfindlich ist, um die Herstellung einer Markierung in der Markierungs-Unterschicht (20) unter der Wirkung dieser Laserstrahlung zu gestatten, die durch jede Deckschicht (21, 22) hindurchgeht,
∘ mindestens eine Markierung (13) mit optisch veränderbarem Effekt enthält, die im Verhältnis zur Lasermarkierungs-Unterschicht so angeordnet ist, dass die Außenseite (11) einen Teilbereich mit optisch veränderbarem Effekt, der mindestens einem Abschnitt der Lasermarkierungs-Unterschicht (20) optisch überlagert ist, und einen Teilbereich (16) ohne Markierung mit optisch veränderbarem Effekt, der mindestens einem Abschnitt der Lasermarkierungs-Unterschicht (20) optisch überlagert ist, aufweist,
**dadurch gekennzeichnet, dass**:
- die mindestens eine Deckschicht (21, 22) ferner mindestens ein Markierungsmittel enthält, das für die Laserstrahlung empfindlich ist, um die Herstellung einer Markierung in der mindestens einen Deckschicht (21, 22) unter der Wirkung dieser Laserstrahlung zu gestatten,
- wobei der Teilbereich (16) ohne Markierung mit optisch veränderbarem Effekt und der Teilbereich mit optisch veränderbarem Effekt mit Gehalten an mindestens einem Markierungsmittel, das für die Laserstrahlung empfindlich ist, zwischen der Außenseite (11) des Trägers und der Lasermarkierungs-Unterschicht (20) ausgebildet sind, die verschieden sind, und
- der Teilbereich (16) ohne Markierung mit optisch veränderbarem Effekt kein Markierungsmittel aufweist, das für die Laserstrahlung empfindlich ist, wobei mindestens ein Markierungsmittel, das für die Laserstrahlung empfindlich ist, in mindestens einer Deckschicht (21, 22) nur in dem Teilbereich mit optisch veränderbarem Effekt enthalten ist.

2. Verfahren nach Anspruch 1, **dadurch gekennzeichnet, dass** jede Markierung (13) mit optisch veränderbarem Effekt im Verhältnis zur Lasermarkierungs-Unterschicht (20) so angeordnet ist, dass sich die Lasermarkierungs-Unterschicht (20) gegenüber mindestens einer Trennung (17, 18) zwischen dem Teilbereich mit optisch veränderbarem Effekt und dem Teilbereich (16) ohne Markierung mit optisch veränderbarem Effekt erstreckt.

3. Verfahren nach Anspruch 1 oder 2, **dadurch gekennzeichnet, dass** die Gehalte an mindestens einem Markierungsmittel, das für die Laserstrahlung empfindlich ist, so gewählt sind, dass die Lasermarkierung, die unter der Wirkung der Laserstrahlung erhalten wird, wie auf der Außenseite (11) ersichtlich, wenigstens im Wesentlichen homogen ist.

4. Verfahren nach einem der Ansprüche 1 bis 3, **dadurch gekennzeichnet, dass** mindestens eine Deckschicht (21, 22), die mindestens ein Markierungsmittel enthält, das für die Laserstrahlung empfindlich ist, und mindestens eine Deckschicht (21, 22), die mindestens eine Markierung mit optisch veränderbarem Effekt enthält, optisch überlagert sind.

5. Verfahren nach einem der Ansprüche 1 bis 4, **dadurch gekennzeichnet, dass** mindestens ein Markierungsmittel, das für die Laserstrahlung empfindlich ist, in mindestens einer Deckschicht (21, 22) enthalten ist, die mindestens eine Lasermarkierung mit optisch veränderbarem Effekt umfasst.

6. Verfahren nach einem der Ansprüche 1 bis 5, **dadurch gekennzeichnet, dass** jede Deckschicht (21, 22) und die Lasermarkierungs-Unterschicht (20) nach der Herstellung jeder Markierung mit optisch veränderbarem Effekt heiß- und drucklaminiert werden.

7. Mehrschicht-Datenträger umfassend mindestens eine Schicht aus mindestens einem thermoplastischen Material, der dazu geeignet ist, unter der Wirkung einer Laserstrahlung markiert zu werden, die auf mindestens eine Außenseite (11) dieses Datenträgers angewandt wird, umfassend:
- mindestens eine Schicht, die Deckschicht (21, 22):
∘ die für eine Markierungslaserstrahlung transparent ist,
∘ die sich zwischen der Außenseite (11) und einer Schicht, der Lasermarkierungs-Unterschicht (20), erstreckt, die für diese Laserstrahlung empfindlich ist, um die Herstellung einer Markierung in der Markierungs-Unterschicht (20) unter der Wirkung dieser Laserstrahlung zu gestatten, die durch jede Deckschicht (21, 22) hindurchgeht,
∘ die mindestens eine Markierung (13) mit optisch veränderbarem Effekt enthält, die im Verhältnis zur Lasermarkierungs-Unterschicht so angeordnet ist, dass die Außenseite (11) einen Teilbereich mit optisch veränderbarem Effekt, der mindestens einem Abschnitt der Lasermarkierungs-Unterschicht (20) optisch überlagert ist, und einen Teilbereich (16) ohne Markierung mit optisch veränderbarem Effekt, der mindestens einem Abschnitt der Lasermarkierungs-Unterschicht (20) optisch überlagert ist, aufweist,
**dadurch gekennzeichnet, dass**:
- die mindestens eine Deckschicht (21, 22) ferner mindestens ein Markierungsmittel enthält, das für die Laserstrahlung empfindlich ist, um die Herstellung einer Markierung in der mindestens einen Deckschicht (21, 22) unter der Wirkung dieser Laserstrahlung zu gestatten,
- wobei der Teilbereich (16) ohne Markierung mit optisch veränderbarem Effekt und der Teilbereich mit optisch veränderbarem Effekt mit Gehalten an mindestens einem Markierungsmittel, das für die Laserstrahlung empfindlich ist, zwischen der Außenseite (11) des Trägers und der Lasermarkierungs-Unterschicht (20) ausgebildet sind, die verschieden sind, und
- der Teilbereich (16) ohne Markierung mit optisch veränderbarem Effekt kein Markierungsmittel aufweist, das für die Laserstrahlung empfindlich ist, wobei mindestens ein Markierungsmittel, das für die Laserstrahlung empfindlich ist, in mindestens einer Deckschicht (21, 22) nur in dem Teilbereich mit optisch veränderbarem Effekt enthalten ist.

8. Träger nach Anspruch 7, **dadurch gekennzeichnet, dass** sich die Lasermarkierungs-Unterschicht (20) gegenüber mindestens einer Trennung (17, 18) zwischen dem Teilbereich mit optisch veränderbarem Effekt und dem Teilbereich (16) ohne Markierung mit optisch veränderbarem Effekt erstreckt.

9. Träger nach einem der Ansprüche 7 oder 8, **dadurch gekennzeichnet, dass** die Gehalte an mindestens einem Markierungsmittel, das für die Laserstrahlung empfindlich ist, so gewählt sind, dass die Lasermarkierung, die unter der Wirkung der Laserstrahlung erhalten wird, wie auf der Außenseite (11) ersichtlich, wenigstens im Wesentlichen homogen ist.

10. Träger nach einem der Ansprüche 7 bis 9, **dadurch gekennzeichnet, dass** jede Deckschicht (21, 22) im sichtbaren Wellenlängenbereich transparent ist, und dadurch, dass die Lasermarkierungs-Unterschicht (20) geeignet ist, unter der Wirkung der Laserstrahlung eine Markierung im sichtbaren Wellenlängenbereich herzustellen.

11. Offizielles Dokument umfassend einen Datenträger nach einem der Ansprüche 7 bis 10, dessen mindestens eine Außenseite (11) mindestens eine Lasermarkierung aufweist.

12. Dokument nach Anspruch 11, **dadurch gekennzeichnet, dass** mindestens eine Lasermarkierung mindestens einer Trennung (17, 18) zwischen mindestens einer Markierung mit optisch veränderbarem Effekt und dem Teilbereich ohne Markierung mit optisch veränderbarem Effekt optisch überlagert ist, und dadurch, dass die Lasermarkierung wenigstens im Wesentlichen homogen ist, wie auf der Außenseite (11) ersichtlich.

## Claims

1. Method for producing a multilayer data medium by means of hot pressure lamination of a stack of a plurality of superposed layers comprising at least one layer made of at least one thermoplastic material, able to be marked under the effect of a laser radiation applied to at least one outer face (11) of this data medium, in which:
- at least one layer, called a covering layer (21, 22) :
∘ transparent to a marking laser radiation,
∘ extending between said outer face (11) and a layer, called a laser-marking sublayer (20), sensitive to this laser radiation, so as to allow the production of a marking in the marking sublayer (20) under the effect of this laser radiation passing through each covering layer (21, 22),
∘ incorporating at least one marking (13) with an optically variable effect arranged relative to the laser-marking sublayer such that said outer face (11) has a portion with an optically variable effect optically superposed on at least part of the laser-marking sublayer (20) and a portion (16) devoid of marking with an optically variable effect optically superposed on at least part of the laser-marking sublayer (20),
**characterized in that**:
- said at least one covering layer (21, 22) further incorporates at least one marking agent sensitive to said laser radiation so as to allow the production of a marking in said at least one covering layer (21, 22) under the effect of this laser radiation,
- said portion (16) devoid of marking with an optically variable effect and said portion with an optically variable effect are produced with contents of at least one marking agent sensitive to said laser radiation, between said outer face (11) of the support and said laser-marking sublayer (20), which are different, and
- said portion (16) devoid of marking with an optically variable effect is devoid of marking agent sensitive to said laser radiation, at least one marking agent sensitive to said laser radiation being incorporated into at least one covering layer (21, 22) only in said portion with an optically variable effect.

2. Method according to Claim 1, **characterized in that** each marking (13) with an optically variable effect is arranged relative to the laser-marking sublayer (20) such that said laser-marking sublayer (20) extends facing at least one separation (17, 18) between the portion with an optically variable effect and the portion (16) devoid of marking with an optically variable effect.

3. Method according to one of Claims 1 and 2, **characterized in that** said contents of at least one marking agent sensitive to said laser radiation are chosen so that the laser marking obtained under the effect of said laser radiation, as it appears from said outer face (11), is at least substantially homogeneous.

4. Method according to one of Claims 1 to 3, **characterized in that** at least one covering layer (21, 22) incorporating at least one marking agent sensitive to said laser radiation and at least one covering layer (21, 22) comprising at least one marking with an optically variable effect are optically superposed.

5. Method according to one of Claims 1 to 4, **characterized in that** at least one marking agent sensitive to said laser radiation is incorporated into at least one covering layer (21, 22) comprising at least one laser marking with an optically variable effect.

6. Method according to one of Claims 1 to 5, **characterized in that** each covering layer (21, 22) and the laser-marking sublayer (20) are hot pressure laminated after each marking with an optically variable effect has been produced.

7. Multilayer data medium comprising at least one layer made of at least one thermoplastic material, able to be marked under the effect of a laser radiation applied to at least one outer face (11) of this data medium, comprising:
- at least one layer, called a covering layer (21, 22) :
∘ transparent to a marking laser radiation,
∘ extending between said outer face (11) and a layer, called a laser-marking sublayer (20), sensitive to this laser radiation, so as to allow the production of a marking in the marking sublayer (20) under the effect of this laser radiation passing through each covering layer (21, 22),
∘ incorporating at least one marking (13) with an optically variable effect arranged relative to the laser-marking sublayer such that said outer face (11) has a portion with an optically variable effect optically superposed on at least part of the laser-marking sublayer (20) and a portion (16) devoid of marking with an optically variable effect optically superposed on at least part of the laser-marking sublayer (20),
**characterized in that**:
- said at least one covering layer (21, 22) further incorporates at least one marking agent sensitive to said laser radiation so as to allow the production of a marking in said at least one covering layer (21, 22) under the effect of this laser radiation,
- said portion (16) devoid of marking with an optically variable effect and said portion with an optically variable effect are produced with contents of at least one marking agent sensitive to said laser radiation, between said outer face (11) of the support and said laser-marking sublayer (20), which are different, and
- said portion (16) devoid of marking with an optically variable effect is devoid of marking agent sensitive to said laser radiation, at least one marking agent sensitive to said laser radiation being incorporated into at least one covering layer (21, 22) only in said portion with an optically variable effect.

8. Medium according to Claim 7, **characterized in that** said laser-marking sublayer (20) extends facing at least one separation (17, 18) between the portion with an optically variable effect and the portion (16) devoid of marking with an optically variable effect.

9. Medium according to one of Claims 7 and 8, **characterized in that** said contents of at least one marking agent sensitive to said laser radiation are chosen so that the laser marking obtained under the effect of said laser radiation, as it appears from said outer face (11), is at least substantially homogeneous.

10. Support according to one of Claims 7 to 9, **characterized in that** each covering layer (21, 22) is transparent in the visible wavelength range, and **in that** the laser-marking sublayer (20) is designed to produce a marking in the visible wavelength range under the effect of said laser radiation.

11. Official document comprising a data medium according to one of Claims 7 to 10, at least one outer face (11) of which has at least one laser marking.

12. Document according to Claim 11, **characterized in that** at least one laser marking is optically superposed on at least one separation (17, 18) between at least one marking with an optically variable effect and the portion devoid of marking with an optically variable effect, and **in that** said laser marking is at least substantially homogeneous as it appears from said outer face (11).
